# EUROPEAN PATENT APPLICATION

(11) **EP 1 720 142 A1**
(43) Date of publication of application: **08.11.2006**
(21) Application number: 06075888.5
(22) Date of filing: 14.04.2006
(51) Int. Cl.: G08B 13/196

(54) **Vehicle security monitor system and method**

(30) Priority: 06.05.2005 US 123429
(71) Applicant: Delphi Technologies, Inc., Troy, Michigan 48007 (US)
(72) Inventor: Widmann, Glenn R., Noblesville, IN 46062-7150 (US); Scharenbroch, Gregory K., Kokomo, IN 46901 (US); Harter Jr., Joseph E., Kokomo, IN 46902 (US); Smith, Matthew R., Westfield, IN 46074 (US)
(74) Representative: Denton, Michael John

(57) **Abstract**

A vehicle security monitoring system (20) and method (100) is provided for monitoring the security in detection zones (24A-24D) near a vehicle (10). The system (20) includes motion detectors (26A-26D) positioned to detect motion of an object within security zones (24A-24D) of a vehicle and cameras (28A-28D) positioned to generate video images of the security zones (24A-24D). A display (50) located onboard the vehicle (10) displays images generated by a camera (24A) when the camera (24A) is activated. A controller (34) controls activation of the camera (24A) and presentation of images on the display (50). The controller (34) activates the camera (34A) and controls the display (50) to output images captured by the camera (34A) when a moving object is detected in the security zone (24A).

## Description

### Technical Field

The present invention generally relates to security systems and, more particularly, relates to a camera-based security system for use onboard a vehicle, particularly for monitoring the security of a commercial vehicle.

### Background of the Invention

Many commercial vehicles are equipped with a tractor truck towing a trailer, also referred to as a semi-truck. The trailer often includes a cargo trailer having a cargo compartment for transporting a large volume of cargo. Other commercial vehicles have the cargo compartment combined with the tractor, also referred to as box trucks. The cargo compartment and truck cab are typically accessed via loading/unloading doors. This may include doors located along the sides and rear of the vehicle and/or trailer.

One increasing concern in the commercial vehicle market is the theft of the vehicle and the cargo carried onboard the vehicle. Many commercial vehicles include sleeping accommodations within the tractor cab. The vehicle and the cargo may be vulnerable to thieves when the vehicle is stationary and the driver is sleeping in the tractor cab. Similarly, the vehicle and its cargo may also be vulnerable to theft when the driver of the vehicle has left the vehicle.

Vehicles are often equipped with conventional locks and security alarms for preventing unauthorized access and detecting an intruder attempting to enter the cab of the vehicle. Some commercial vehicles have locks on the cargo doors and provide a warning when a cargo door is opened without proper authorization. Other security systems employ steering column locks, key immobilizers, and vehicle tracking systems for tracking a stolen vehicle. Conventional vehicle security systems typically are stand alone systems that offer limited functionality and are often costly. However, commercial vehicles generally do not provide security monitoring to detect an intruder and prospective theft of the cargo located in the cargo trailer.

It is therefore desirable to provide for a system and method that monitors the security of the vehicle and its cargo. It is further desirable to provide for such a cost-effective integrated system and method that detects intruders near the vehicle and provides security monitoring to help prevent loss of cargo onboard a commercial vehicle.

### Summary of the Invention

In accordance with one aspect of the present invention, a vehicle security monitoring system is provided for monitoring the security within a detection zone nearby the vehicle. The system includes a motion detector positioned to detect motion of an object within a security zone of a vehicle and a camera positioned to generate video images of at least a portion of the security zone. The system also includes a display adapted to be located onboard the vehicle for displaying images generated by the camera when the camera is activated. The system further has a controller for controlling activation of the camera and presentation of images on the display. The controller activates the camera and controls the display to output images captured by the camera when a moving object is detected in the security zone by the motion detector.

According to another aspect of the present invention, a method of monitoring security of a vehicle is provided. The method includes the steps of monitoring a security zone near a vehicle and detecting movement of an object within the security zone by using a motion detector. The method also includes the steps of activating a camera when motion is detected by an object within the security zone so that the camera captures video images of the security zone. The method further includes the step of displaying the video images captured by the camera on a display onboard the vehicle.

Accordingly, the system and method of the present invention advantageously provide for security monitoring of a vehicle by detecting a moving object, such as an intruder, and capturing video images of the object for presentation on a display onboard the vehicle. The system and method are particularly well adapted for use on a commercial vehicle to provide security monitoring to help prevent and/or minimize theft of cargo from the commercial vehicle.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a top schematic view of a commercial vehicle (e.g., semi-truck) equipped with a security monitoring system according to the present invention;
FIG. 2 is a block diagram illustrating the security monitoring system of the present invention;
FIG. 3 is a front perspective view of a portion of the cockpit of the vehicle illustrating a drop-down display in the use position;
FIG. 4 is an enlarged rear perspective view of the display shown retracted in the use position further illustrating the drive assembly;
FIG. 5 is a front perspective of the drop-down display in the stowed position;
FIG. 6 is an enlarged rear perspective view of the display shown in the stowed position; and
FIG. 7 is a flow diagram illustrating the security monitor routine employed by the security monitoring system.

### Description of the Preferred Embodiments

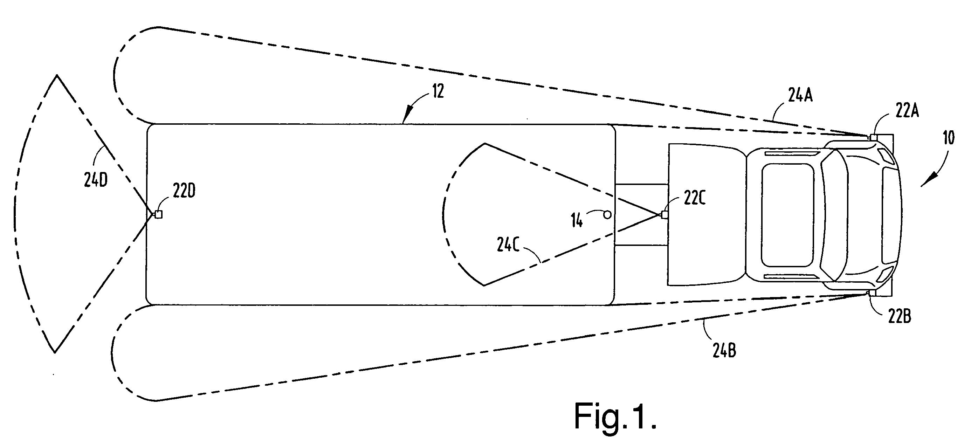

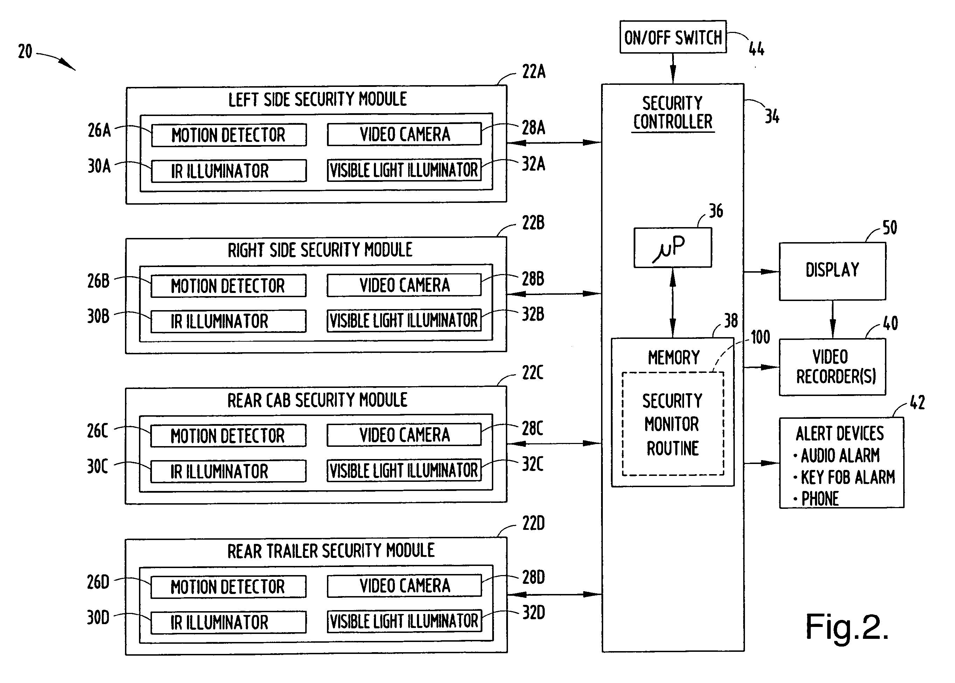

Referring to FIGS. 1 and 2, a vehicle security monitoring system 20 is shown employed on a commercial vehicle 10, according to one embodiment of the present invention. The vehicle 10 may include a commercial vehicle, such as a tractor and trailer semi-truck having a fifth wheel tow hitch 14 adapted to trailer a cargo trailer 12, according to one embodiment. According to other embodiments, the vehicle 10 may include a box truck or recreational vehicle (RV). The vehicle security monitoring system 20 may be used onboard other types of vehicles 10 as well as passenger vehicles, according to further embodiments.

The vehicle 10 is equipped with the vehicle security monitoring system 20 shown having a plurality of security modules, identified by reference numerals 22A-22D. Each of the four security modules 22A-22D includes a motion detector, a video camera, an infrared (IR) illuminator and a visible light illuminator, as seen in FIG. 2. Each of security modules 22A-22D is located such as to monitor respective designated security zones 24A-24D to detect intruders and potential theft. The left side security module 22A is located on the left side (driver side) of the vehicle 10 for monitoring the first security zone 24A. The first security zone 24A extends along the entire left side of the vehicle 10 including the driver side cab door and the side of the cargo trailer 12. The security module 22A includes motion detector 26A, video camera 28A and infrared (IR) illuminator 30A and visible light illuminator 32A, all of which cover the first security zone 24A.

The right side security module 22B is mounted on the right side (passenger side) of the vehicle 10 for monitoring the second security zone 24B. The second security zone 24B extends along the entire right side of the vehicle 10 including the passenger side cab door and the side of the cargo trailer 12. The security module 22B includes motion detector 26B, video camera 28B, an infrared (IR) illuminator 30B and visible light illuminator 32B. Each of the motion detector 26B, video camera 28B, IR illuminator 30B and visible light illuminator 32B covers the second security zone 24B.

The third security module 22C is positioned at the rear side of the vehicle tractor cab to monitor a third security zone 24C in the general region of the fifth wheel hitch 14 and the region in the near vicinity of the rear tractor compartment. Security module 22C includes motion detector 26C, video camera 28C, infrared (IR) illuminator 30C and visible light illuminator 32C, all of which cover the third security zone 24C. The third security module 22C may be used to monitor the security of the trailer 12. The third security module 22C and its camera 28C may also be employed as a backup camera to aid in viewing the region behind the vehicle 10 when backing up in reverse and to help align the vehicle tractor with the trailer 12 to perform a hitch connection.

The fourth security module 22D is positioned at the rear of the cargo trailer 12 to monitor security zone 24D. Security module 22D includes motion detector 26D, video camera 28D, infrared (IR) illuminator 30D and visible light illuminator 32D, all of which cover the fourth security zone 24D. Security module 22D monitors the region behind the trailer 12 of vehicle 10, and is particularly adapted to monitor the security of the rear cargo loading/unloading door(s). The rear security module 22D employs a camera 28D that may also serve as a backup camera to aid when the vehicle 10 is backing up in reverse.

Each of the security modules 22A-22D is equipped with a motion detector, video camera, and IR and visible light illuminators, all of which may be housed in a common module, according to one embodiment. The motion detectors 26A-26D may each include a commercially available off-the-shelf ultrasonic motion detector providing a detection field of view and range within the corresponding security zone to detect sustained motion of an object as the object moves within the corresponding security zone in the near vicinity of the exterior of the vehicle 10. The motion detectors 26A-26D may employ conventional logic to discriminate between sustained motion and random periodic motion of objects.

The motion detectors 26A-26D may include a low power detecting unit which is enabled only when the security monitoring system 20 is enabled in order to ensure long time period operation and minimize electrical power drain on the vehicle battery. Additionally, the security monitor system 20 may be powered by the vehicle battery and/or other supplemental power sources, such as a hidden power supply.

The video cameras 28A-28B may each include a commercially available off-the-shelf video camera for capturing video images. Each of the video cameras 28A-28D are positioned to capture images in a field of view sufficiently large to cover the corresponding security zone. The video cameras 28A-28D may employ known lenses for capturing optically-distorted views or non-optically-distorted views. If any of the cameras 28A-28D employ an optically-distorted lens (e.g., fishbowl lens), then an optical correction lens may also be employed to correct for any optical distortion.

The IR illuminators 30A-30D and visible light illuminators 32A-32D each may include a commercially available off-the-shelf illumination device. Each of the illuminators 30A-30D and 32A-32D provide a sufficiently wide field of view illumination to cover the corresponding security zones 24A-24D. It should be appreciated that the IR light generated by the IR illuminators 30A-30D allows nighttime operation of the video cameras 28A-28D, respectively, to capture images, while remaining invisible to any intruders. The visible light generated by the visible light illuminators 32A-32D is generally detectable and visible to any intruder, and thus also serve as a theft deterrent.

The vehicle security monitoring system 20, as is shown in FIG. 2, has a security controller 34 communicating with each of the four security modules 22A-22D. The security controller 34 communicates with a display 50 which is located onboard the vehicle 10. The display 50 provides output video images for viewing in the vehicle 10 and also outputs the video images to one or more video recorder(s) 40 for recording. The video recorder(s) 40 may include analog or digital video storage devices, and the video recording is controlled by the security controller 34. The video recorder 40 records the monitored video scene for past event assessment and intruder identification.

The security monitoring system 20 also includes any of a number of alert devices 42 responsive to the security controller 34 for alerting the driver or others of a potential security threat. The alert devices 42 may include an audio alarm, an audible and/or vibratory key fob, activation of vehicle lights such as headlights. Alert devices 42 may further include remote communications to alert others, such as police.

The security controller 34 has a microprocessor 36 and memory 38. The microprocessor 36 may include a conventional microprocessor having the capability for processing algorithm(s) and data. Memory 34 may include read-only memory (ROM), random access memory (RAM), flash memory and other commercially available volatile and non-volatile memory devices. Stored within memory 38 and executed by microprocessor 36 is a security monitor routine 100. The security monitor routine 100 monitors the motion detection and executes security actions. It should be appreciated that the controller 34 may include an electronic controller dedicated to the security monitoring system 20 according to one embodiment, or may include a shared controller, such as a body controller of the host vehicle 10, according to other embodiments.

The security monitoring system 20 further includes an on/off switch 44 for activating and deactivating the system 20. The on/off switch 44 may be located in the vehicle 10 and/or may be located on a transportable key fob. When the security monitoring system 20 is activated, the security controller 34 monitors output signals generated by each of the four motion detectors 26A-26D, and determines whether motion of an object is detected in any of the respective security zones 24A-24D. When motion is detected in any of the security zones 24A-24D, the security controller 34 activates the corresponding video cameras 28A-38D in the corresponding security zones 22A-22D in which the object motion was detected. At the same time, the security controller 34 activates the display 50 onboard the vehicle 10 to present the captured video images on the display 50 onboard the vehicle 10.

The security controller 34 may also activate the infrared illuminator 30 and/or visible light illuminator 32 to illuminate the corresponding security zone. By activating the infrared illuminator 30, sufficient lighting is provided to generate video images, such that the potential intruder may not be aware of the nighttime illumination. Activation of the visible light illuminator 32 further acts as a theft deterrent by informing a potential intruder know that he/she has been detected, thus potentially deterring any further intrusion.

The security controller 34 may further activate any of a number of alert devices both on and off-board the vehicle 10, and may activate one or more video recorders 40 to record video of the intruder. Recorded video may be used to identify an intruder. The one or more video recorders 40 may record video captured by one or more of the four video cameras 28A-28D. It should further be appreciated that captured video and warnings may be communicated remotely via cell phone or other remote communication technique.

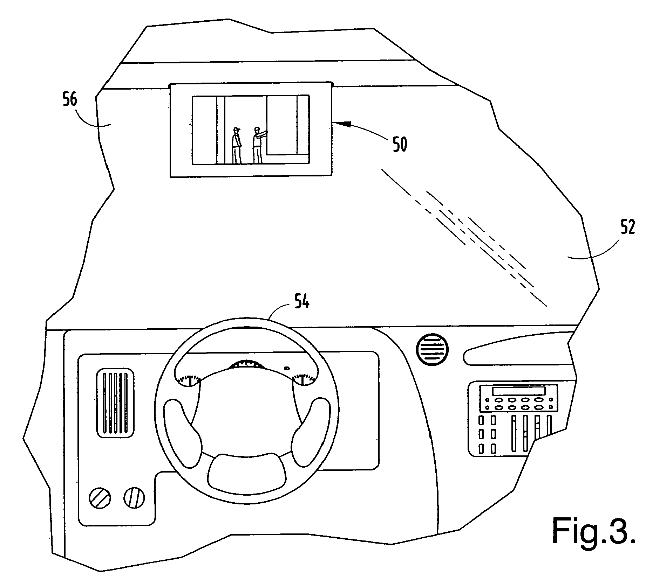

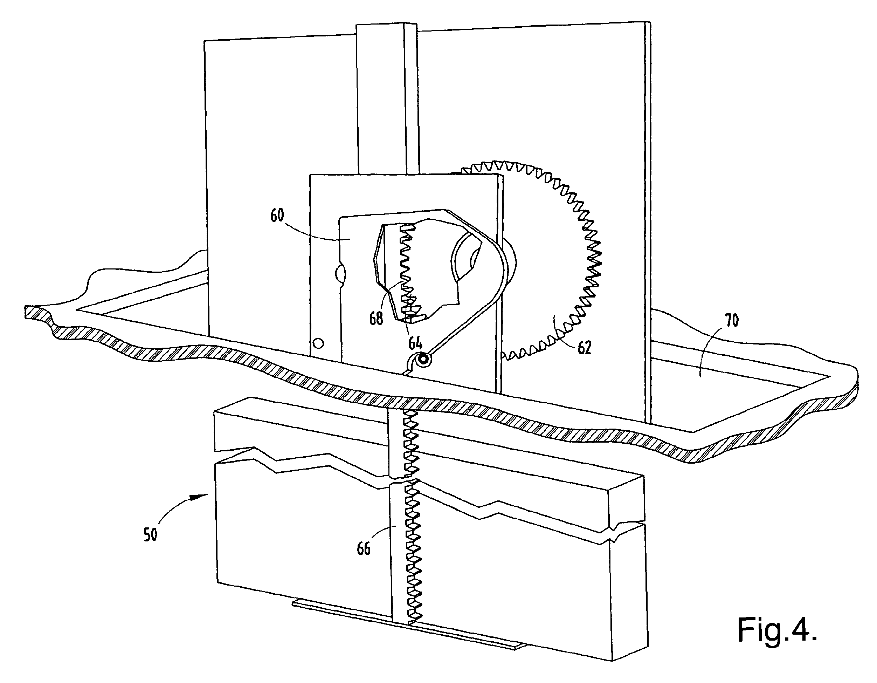

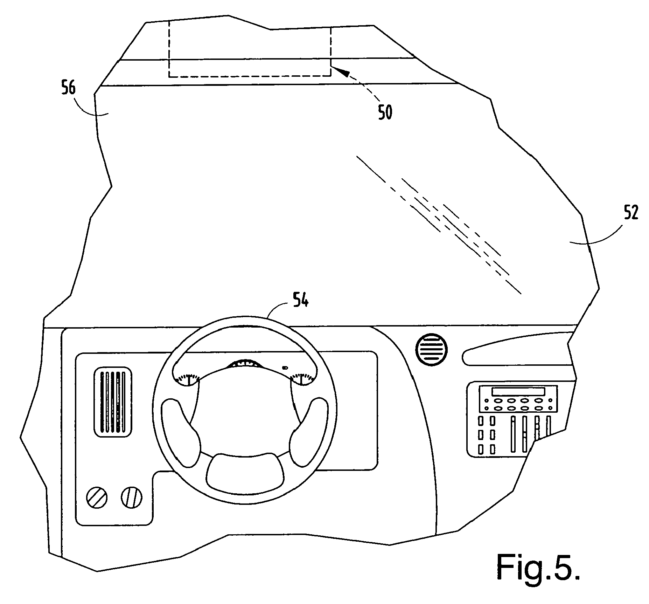

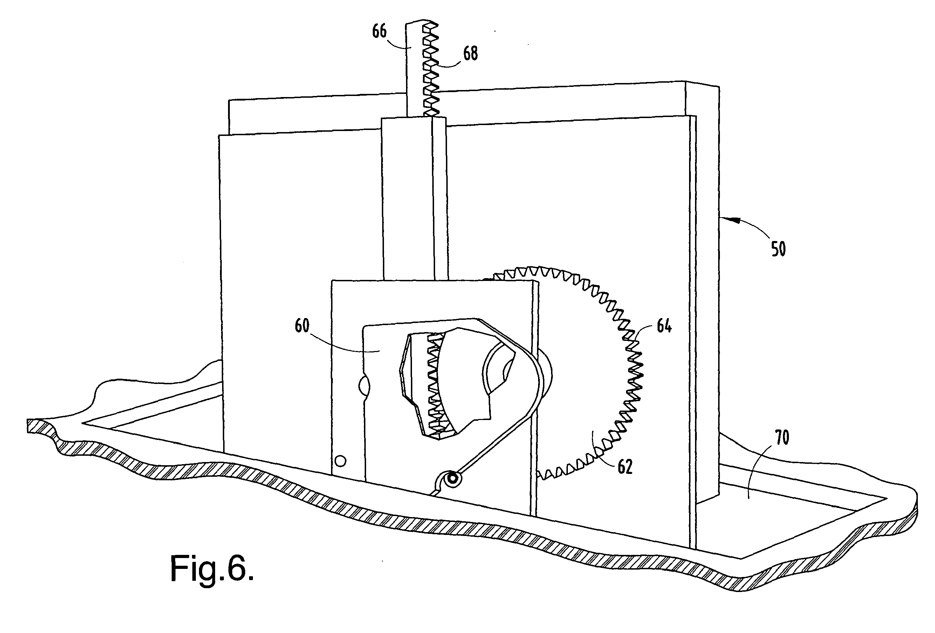

The onboard vehicle display 50 is further illustrated in FIGS. 3-6. The display 50 is a drop-down display that moves between an upward stowed position in an overhead compartment 56 as seen in FIGS. 5 and 6 and a use position in view forward of the driver above the steering wheel 54 as seen in FIGS. 3 and 4. The display 50 moves upward and downward through an opening 70 in the lower region of the storage compartment 56. The display 50 is a forward view display located on the driver's centerline looking forward in front of windshield 52, and is easily viewable from the driver seat and the rear cab of the vehicle 10.

The drop-down display 50 may include a liquid crystal display (LCD), or other relatively thin panel monitor display. The display 50 is rigidly connected to a generally T-shaped transport rack 66 via fasteners, such as bolts, for example. Transport rack 66 has teeth 68 which engage teeth 64 of gear 62. Gear 62 is driven by a motor 60. The motor 60 is an electric motor that may be controlled by the security controller 34 to drive the drop-down display 50 downward to the fully downward use position and to raise the display 50 to its retracted position fully stowed in compartment 56. The motor 60 and gear 62 are mounted in the overhead compartment 56.

It should be appreciated that the display 50 may include alternative automatic and manual actuated display devices. According to another embodiment, the drop-down display 50 may be manually actuated by the driver of the vehicle between the upward stowed position and downward use position. According to a further embodiment, the display 50 may include a flip-type display in which the display pivots on one end between a downward extending use position and an upper stowed position. For example, a flip-type display could be integrated into the overhead visor of the vehicle 10 and pivot about one edge of the visor.

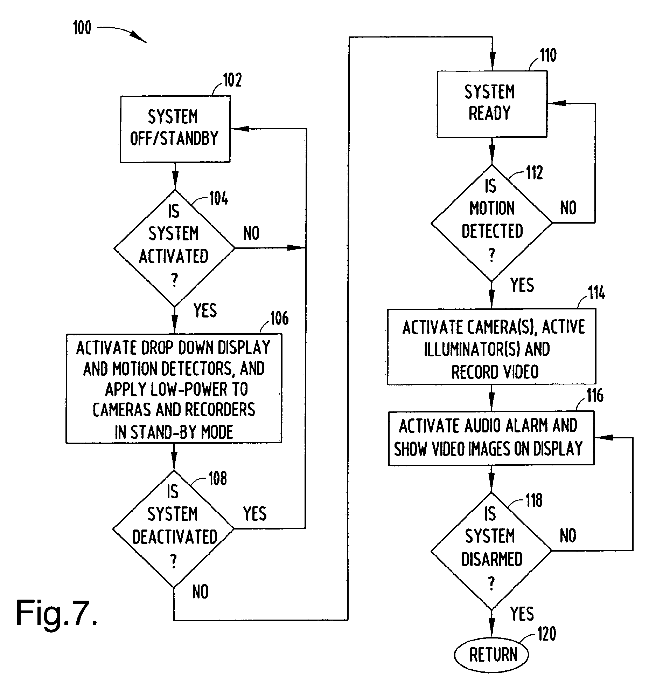

Referring to FIG. 7, a security monitor routine 100 is illustrated according to one embodiment. Routine 100 begins at step 102 with the vehicle security monitoring system in the off or standby mode. The system generally remains turned off when the vehicle 10 is moving. In decision step 104, routine 100 determines if the system is activated and, if not, returns to step 102. The vehicle security monitor system may be activated manually by the driver activating the on/off switch. According to other embodiments, the system could automatically be activated.

If the security monitor system is determined to be activated, security monitor routine 100 proceeds to activate the drop-down display and motion sensors, and applies low power to the cameras and video recorders in a standby mode in step 106. Following activation step 106, routine 100 proceeds to decision step 108 to determine if the system is deactivated. If the system is deactivated, routine 100 returns to step 102. Otherwise, with the system activated, routine 100 proceeds to set the security monitor system in the ready mode in step 110.

Vehicle security monitor routine 100 determines if motion of an object has been detected in step 112. This is achieved by monitoring the output of the ultrasonic motion detectors in each of the security zones. If motion has not been detected, routine 100 repeats steps 110 and 112. When motion has been detected, routine 100 proceeds to apply full power to activate the video cameras and the video recorder associated with the security zone in which motion has been detected. Additionally, the illuminator may also be activated to provide IR or visible light illumination during nighttime monitoring.

With the cameras, recorder(s) and illuminators activated, routine 100 turns on an audio alarm display in step 116 and shows the captured video images on the display. Next, routine 100 determines if the system is disarmed and, if not, returns to step 116. If the system has been disarmed, routine 100 returns in step 120 to the beginning where the system is in the off or standby mode.

The video security monitor system 20 and security monitor routine 100 advantageously provides for low cost integrated vehicle security monitoring to deter theft of the vehicle 10 and its cargo. It should be appreciated that the various components of the security monitor system 20 including video cameras, display and illuminators may be integrated within the vehicle 10 to provide other functionality. For example, the side security modules 22A and 22B could also be employed to provide turning assist to aid in turning the vehicle 10, as is disclosed in U.S. Application No. [Docket No. DP-312914], entitled "VEHICLE TURNING ASSIST SYSTEM AND METHOD," filed on the same date, the entire disclosure of which is hereby incorporated herein by reference. The side security modules 22A-22B could also serve to monitor the adjacent lanes for assistance in changing lanes. The security modules 22C and 22D could also serve as backup aids for providing the driver with a visual image of rearward regions of the vehicle 10 when backing up and when aligning the trailer 12 with the vehicle 10. It should further be appreciated that the drop down display 50 may be employed to display video images and information using any of a number of applications including navigation, entertainment and other information.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A vehicle security monitor system (20) comprising:
a motion detector (26A) positioned to detect motion of an object within a security zone (24A) of a vehicle (10);
a camera (28A) positioned to generate video images of at least a portion of the security zone (24A);
a display (50) adapted to be located onboard the vehicle (10) for displaying images generated by the camera (28A) when the camera (28A) is activated; and
a controller (34) for controlling activation of the camera (28A) and presentation of images on the display (50), wherein the controller (34) activates the camera (28A) and controls the display (50) to output images captured by the camera (28A) when a moving object is detected within the security zone (24A) by the motion detector (26A).

2. The system as defined in claim 1 further comprising an illuminator (32A) for illuminating at least a portion of the security zone (24A) when the motion detector (26A) detects movement of an object in the security zone (24A).

3. The system as defined in claim 2, wherein the illuminator comprises an infrared illuminator (30A).

4. The system as defined in claim 2, wherein the illuminator comprises a visible light illuminator (32A).

5. The system as defined in claim 1 further comprising a video recorder (40) for recording video images generated by the video camera (28A).

6. The system as defined in claim 1 further comprising an alert device (42) for generating a warning alert when an object is detected by the motion detector (26A) in the security zone (24A).

7. The system as defined in claim 1, wherein the security monitor system (20) is only activated when the vehicle (10) is not moving.

8. The system as defined in claim 1, wherein the display comprises a drop-down display (50) that is stowed in a position when not activated and is movable into a viewing position when activated.

9. The system as defined in claim 8, wherein the drop-down display (50) comprises a motor (60) and a transport rack (66).

10. The system as defined in claim 1, wherein the system comprises a first motion detector (26A) and first camera (28A) for monitoring a first security zone (24A) near the vehicle (10), and a second motion detector (26B) and a second camera (28B) positioned to monitor a second security zone (24B) near the vehicle (10), wherein the controller (34) controls the first and second cameras (28A and 28B) and displays the images generated by the first and second cameras (28A and 28B) on the display (50).

11. The system as defined in claim 1, wherein the vehicle (10) comprises a commercial truck.

12. A method (100) of monitoring a security zone (24A) near a vehicle (10) when the vehicle (10) is not moving, said method comprising the steps of:
monitoring (106) a security zone (24A) near a vehicle (10);
detecting (112) movement of an object in the security zone (24A) by using a motion detector (26A);
activating (114) a camera (28A) when motion is detected by an object in the security zone (24A) so that the camera (28A) captures video images of the security zone (28A); and
displaying (116) the video images captured by the camera (28A) on a display (50) onboard the vehicle (10).

13. The method as defined in claim 12 further comprising the step of deactivating the camera (28A) when the motion detector (26A) no longer detects movement of an object in the security zone (24A).

14. The method as defined in claim 12 further comprising the step of activating (114) an illuminator (32A) when movement of an object in the security zone (24A) is detected, wherein the illuminator (32A) illuminates at least a portion of the security zone (24A).

15. The method as defined in claim 14, wherein the illuminator comprises an infrared illuminator (30).

16. The method as defined in claim 14, wherein the illuminator comprises a visible light illuminator (32A).

17. The method as defined in claim 12 further comprising the step of activating (114) a video recorder (40) to record video images generated by the video camera (28A).

18. The method as defined in claim 12 further comprising the step of activating (116) an alert device (42) when an object is detected in the security zone (24A).

19. The method as defined in claim 12 further comprising the step of activating (106) a drop-down display (50) to move from a stowed position to a viewable position when the display (50) is to be activated.

20. The method as defined in claim 12, wherein the steps of detecting motion and activating a camera (28A) comprises detecting motion of objects in first and second security zones (24A and 24B) and activating first and second cameras (28A and 28B) to generate video images of the first and second security zones (24A and 24B) when an object is detected in the corresponding security zone (24A and 24B), wherein the display (50) presents video images captured by the first and second cameras (28A and 28B).

21. The method as defined in claim 12, wherein the vehicle (10) comprises a commercial truck.
